# EUROPEAN PATENT APPLICATION

(11) **EP 2 244 517 A1**
(43) Date of publication of application: **27.10.2010**
(21) Application number: 10004357.9
(22) Date of filing: 23.04.2010
(51) Int. Cl.: H04W 72/12

(54) **Method for allocating uplink resources to logical channels in a wireless communication system and related communication device**

(30) Priority: 24.04.2009 US 172221 P
(71) Applicant: HTC Corporation, Taoyuan County 330 (TW)
(72) Inventor: Hsu, Chia-Chun, Taoyuan City Taoyuan County 330 (TW)
(74) Representative: Wagner, Karl H.

(57) **Abstract**

A method for allocating uplink resources to logical channels for a user equipment in a wireless communication system includes enabling a time window when logical channels are established, receiving uplink data through each logical channel, and allocating uplink resources on all configured component carriers which arrive within the time window from a current transmission time interval to all the logical channels with the value of a bucket indicating variable, which indicates the size of uplink data allowable to be transmitted, for each logical channel larger than zero in a decreasing priority order.

## Description

The present invention relates to a method for allocating uplink resources to logical channels in a wireless communication system and related communication device.

A long-term evolution (LTE) system, initiated by the third generation partnership project (3GPP), is now being regarded as a new radio interface and radio network architecture that provides a high data rate, low latency, packet optimization, and improved system capacity and coverage. In the LTE system, an evolved universal terrestrial radio access network (E-UTRAN) includes a plurality of evolved Node-Bs (eNBs) and communicates with a plurality of mobile stations, also referred as user equipments (UEs). The LTE radio protocol stack includes the Layer 3, also known as the Radio Resource Control (RRC) layer, the Layer 2, consisting of three sub-layers that are the Packet Data Convergence Protocol (PDCP) layer, the Radio Link Control (RLC) layer, and the Medium Access Control (MAC) layer, and the Layer 1, also known as the Physical (PHY) layer.

Recently, the 3GPP is involved in the further advancements for E-UTRA and proposes an LTE-Advanced system as an enhancement of the LTE system. Carrier aggregation, where two or more component carriers are aggregated, is introduced into the LTE-Advanced system in order to support wider transmission bandwidths, e.g. up to 100MHz and for spectrum aggregation. A UE of the LTE-Advanced system can simultaneously receive and/or transmit on multiple component carriers.

For an uplink transmission, the UE MAC layer performs a multiplexing and assembly procedure to construct MAC Protocol Data Units (PDUs), also known as transport blocks, transmitted through uplink resources. A MAC PDU consists of a MAC header and a MAC payload. The MAC payload includes MAC control elements, MAC Service Data Units (SDUs), and padding bits, where MAC SDUs are received through logical channels. The MAC header is composed of MAC subheaders, where each MAC subheader consists of a corresponding logical channel identification (LCID) and a length field. The LCID indicates whether the corresponding part of the MAC payload is a MAC control element, and if not, to which logical channel the related MAC SDU belongs. The length field indicates the size of the related MAC SDU or MAC control element.

The UE RRC layer controls the scheduling of uplink data for each logical channel by priority, prioritized bit rate (PBR), and bucket size duration (BSD), which are parameters included in a specific RRC message for establishing a logical channel. The priority is presented by an integer value, and an increasing value indicates a lower priority level. The prioritized bit rate is the data rate provided to one logical channel before any uplink resource is allocated to a lower-priority logical channel, value in kilobytes/second. The bucket size duration indicates how much time for transmitting uplink data of a logical channel by using the prioritized bit rate until the bucket size is reached, value in milliseconds. The bucket size of the logical channel is equal to PBR×BSD.

During the multiplexing and assembly procedure, the UE MAC layer performs a logical channel prioritization procedure to decide the size of uplink data, i.e. MAC SDUs for each logical channel to be included in a MAC PDU. The UE MAC layer maintains a bucket indicating variable, Bj, for each logical channel j, which indicates the size of uplink data allowable to be transmitted. Bj is initialized to zero when the related logical channel is established, and the value of Bj is incremented by the product of (PBR)ⱼ and transmission time interval (TTI) duration for each TTI, where (PBR)ⱼ indicates the prioritized bit rate of the logical channel j. The value of Bj can never exceed the bucket size and if the value of Bj is larger than the bucket size of the logical channel j, it shall be set to the bucket size.

This in mind, the present invention aims at providing a method for allocating uplink resources to logical channels in a wireless communication system and related communication device, for allocating uplink resources which arrive within a time window to logical channels in a wireless communication system and related communication device.

This is achieved by a method for allocating uplink resources to logical channels in a wireless communication system and related communication device according to claims 1 and 8. The dependent claims pertain to corresponding further developments and improvements.

As will be seen more clearly from the detailed description following below, the claimed method for allocating uplink resources to logical channels in a wireless communication system comprises enabling a time window when logical channels are established, receiving uplink data through each logical channel, and allocating uplink resources on all configured component carriers which arrive within the time window from a current transmission time interval to all the logical channels with the value of a bucket indicating variable, which indicates the size of uplink data allowable to be transmitted, for each logical channel larger than zero in a decreasing priority order.

### Brief Description of the Drawings

FIG. 1 is a flowchart of a process according to the prior art.
FIG. 2 is a schematic diagram of a wireless communication system.
FIG. 3 is a schematic diagram of a communication device according to an example of the present invention.
FIG. 4 is a flowchart of a process according to an example of the present invention.

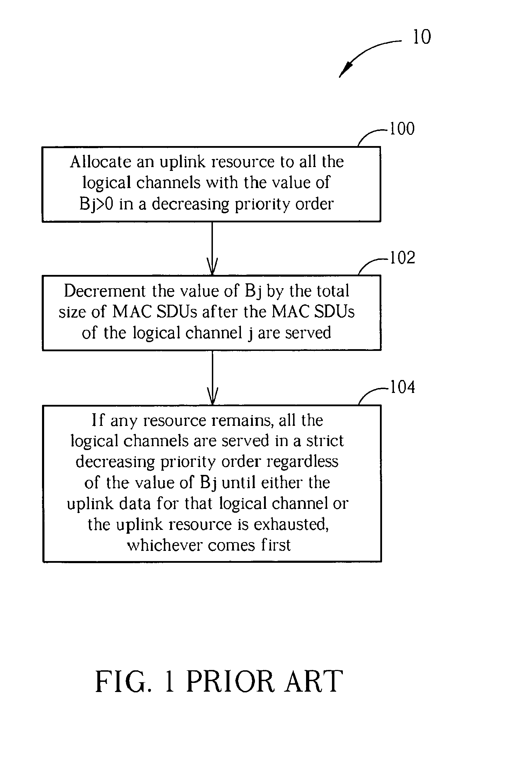

FIG. 1 is a flowchart of a process 10 according to the prior art. The process 10 is a part of the logical channel prioritization procedure, performed by the UE MAC layer for allocating uplink resource to logical channels. The process 10 includes the following steps:
Step 100: Allocate an uplink resource to all the logical channels with the value of Bj>0 in a decreasing priority order.
Step 102: Decrement the value of Bj by the total size of MAC SDUs after the MAC SDUs of the logical channel j are served.
Step 104: If any resource remains, all the logical channels are served in a strict decreasing priority order regardless of the value of Bj until either the uplink data for that logical channel or the uplink resource is exhausted, whichever comes first.

If the (PBR)ⱼ is set to "infinity", the UE allocates uplink resources for all the data available for transmission of the logical channel j before meeting the PBR of any lower-priority logical channel. Logical channels configured with equal priority are served equally. In addition, in the logical channel prioritization procedure the UE does not segment an RLC SDU if the whole RLC SDU fits into the remaining resource; and, if the UE segments an RLC SDU, the size of the segment should be maximized to fill the uplink resource as much as possible. For the logical channel prioritization procedure, the UE takes into account the following relative priority in a decreasing order:
1. MAC control element for Cell-Radio Network Temporary Identifier (C-RNTI) or data from uplink Common Control Channel (UL-CCCH);
2. MAC control element for Buffer Status Report (BSR) except padding BSR;
3. MAC control element for Power Headroom Report (PHR);
4. Data from any logical channel except from UL-CCCH; and
5. MAC control element for padding BSR.

Note that, only available resource at the current TTI is considered when the UE performs the multiplexing and assembly procedure. Therefore, the UE allocates an uplink resource only in the current TTI to all logical channels. When there are multiple logical channels, the uplink resource is divided to serve each logical channel up to its bucket size. The more logical channels share an uplink resource, the more overhead, i.e. MAC subheaders are included in a MAC PDU. However, for the UE in the RRC_CONNECTED mode, besides the current TTI, the UE may already know that other uplink resources are incoming in subsequent TTIs, which may be allocated by dynamic scheduling via the Physical Downlink Control Channel (PDCCH) or the Random Access Response (RAR), by semi-persistent scheduling (SPS), or by any other way.

Since the UE performs the multiplexing and assembly procedure without considering these available resources in subsequent TTIs, extra overhead, i.e., MAC subheaders are generated, which degrades performance of uplink transmission. The above circumstance becomes more serious in an LTE-Advanced system since the UE may have more than one uplink resource on multiple component carriers at one TTI by the reason of carrier aggregation.

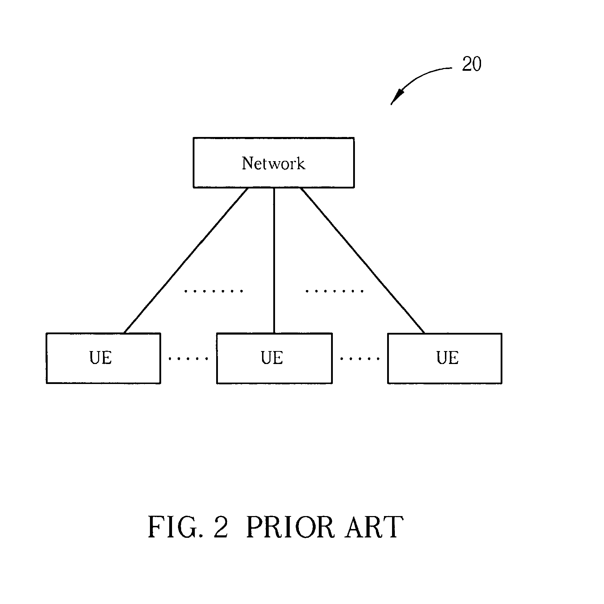

FIG. 2 is a schematic diagram of a wireless communication system 20. The wireless communication system 20 can be a long-term evolution (LTE) system or a system of a further release version, such as an LTE-Advanced system, or other mobile communication systems. The wireless communication system 20 is briefly composed of a network and a plurality of user equipments (UEs), as the structure illustrated in FIG. 2. In the LTE system, the network is referred as an evolved universal terrestrial radio access network (E-UTRAN) comprising a plurality of evolved base stations (eNBs). The UEs can be devices such as mobile phones, computer systems, etc. Besides, the network and the UE can be seen as a transmitter or receiver according to transmission direction, e.g., for uplink (UL), the UE is the transmitter and the network is the receiver, and for downlink (DL), the network is the transmitter and the UE is the receiver.

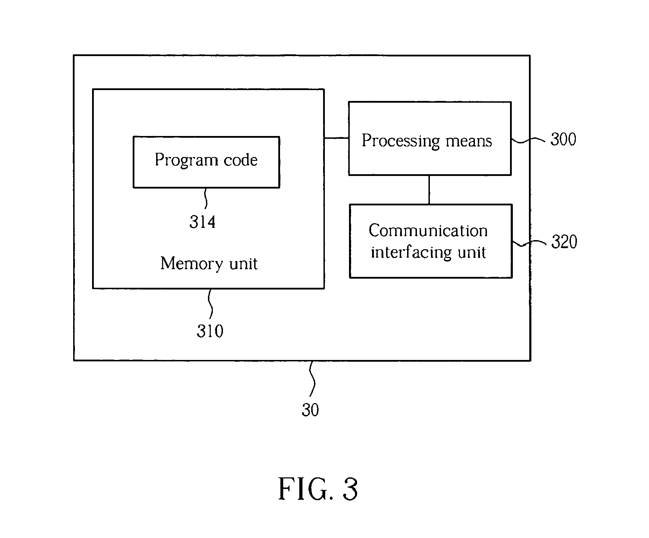

FIG. 3 is a schematic diagram of a communication device 30 according to an example of the present invention. The communication device 30 can be the UE or the network shown in FIG. 2 and may include a processing means 300 such as a microprocessor or ASIC, a memory unit 310, and a communication interfacing unit 320. The memory unit 310 may be any data storage device that can store program code 314 for access by the processing means 300. Examples of the memory unit 310 include but are not limited to a subscriber identity module (SIM), read-only memory (ROM), random-access memory (RAM), CD-ROMs, magnetic tapes, floppy disks, and optical data storage devices. The communication interfacing unit 320 is preferably a radio transceiver for wirelessly communicating with the network according to processing results of the processing means 300.

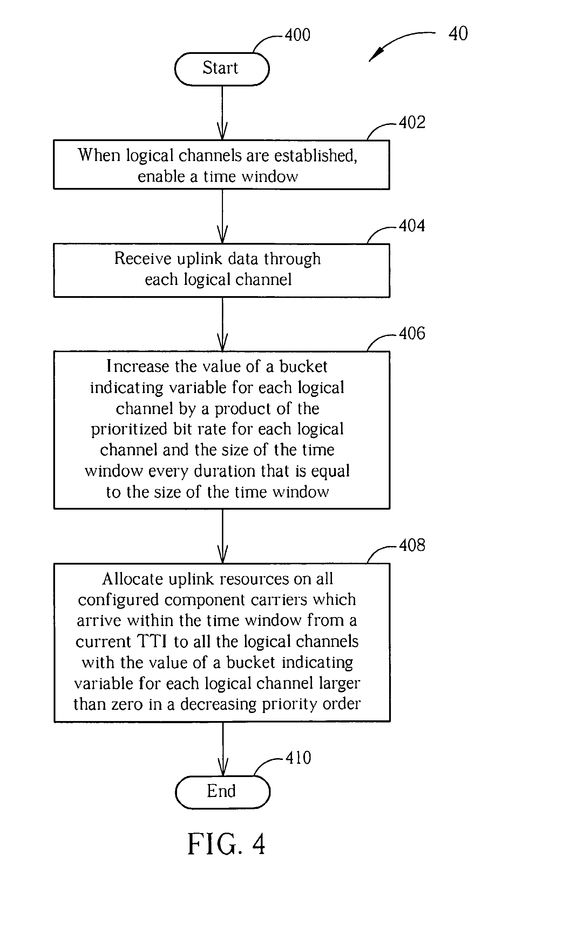

FIG. 4 is a flowchart of a process 40 according to an example of the present invention. The process 40 is utilized for allocating uplink resources to logical channels in a logical channel prioritization procedure by the MAC layer of a UE in the wireless communication system 20. In the process 40, the UE takes into account of available uplink resources arriving not only at the current transmission time interval (TTI) but also in the subsequent TTIs. The process 40 can be compiled into the program code 314. The process 40 includes the following steps:
Step 400: Start.
Step 402: When logical channels are established, enable a time window.
Step 404: Receive uplink data through each logical channel.
Step 406: Increase the value of a bucket indicating variable for each logical channel by a product of the prioritized bit rate for each logical channel and the size of the time window every duration that is equal to the size of the time window.
Step 408: Allocate uplink resources on all configured component carriers which arrive within the time window from a current TTI to all the logical channels with the value of a bucket indicating variable for each logical channel larger than zero in a decreasing priority order.
Step 410: End.

The UE MAC layer applies a look-ahead time window that helps the UE to consider uplink resources not only at the current TTI but in subsequent TTIs. The look-ahead time window, with a size of W TTIs, is assigned by a radio resource control (RRC) signaling sent from the UE RRC layer, or is derived by the UE MAC layer itself according to a semi-persistent scheduling (SPS) period; that is, the size of the time window is a function of the SPS period. The time window can be enabled or disabled by the UE.

When logical channels are established in the RRC_CONNECTED mode, according to Step 402 and Step 404, the UE MAC layer enables the time window and starts receiving uplink data through each logical channel. At the same time, a bucket indicating variable that indicates the size of uplink data of each logical channel j allowable to be transmitted, represented as Bj for each logical channel j, is initialized to zero. After Bj is initialized, according to Step 406, the UE increases the value of Bj for each logical channel j by a product of (PBR)ⱼ×W TTIs, where (PBR)ⱼ is the prioritized bit rate for each logical channel j and W TTIs is the size of the time window. It is reasonable since the uplink resources arriving within W TTIs shall be enough to transmit uplink data of each logical channel j up to (PBR)ⱼ×W TTIs.

According to Step 408, the UE MAC layer allocates uplink resources on all configured component carriers arriving within W TTIs from a current TTI, i.e. within the duration from a current TTI with an index t to a future TTI with an index (t+W-1), to all the logical channels with the value of Bj>0 in a decreasing priority order, which indicates that all uplink resources within W TTIs are allocated to a higher-priority logical channel earlier than to a lower-priority logical channel. The priority order of MAC control elements and data of logical channels used in the process 40 is the same as in the 3GPP MAC specification, and is omitted herein. When there are semi-persistent scheduling (SPS) resources arriving within the time window, the UE prioritizes SPS data, e.g. VoIP data, than any other uplink data or MAC control elements in the SPS resources. The wireless communication system 20 may be an LTE or LTE-Advanced system, and therefore, the number of all the configured component carriers which uplink resources are allocated on during the time window is only one or more than one. According to the process 40, when there are multiple configured component carriers for the UE, the UE allocates uplink resources on all configured component carriers which arrive within the time window from a current TTI.

After the process 40 is performed, all the logical channels with the value of Bj>0 are already served, the UE MAC layer then decreases the value of Bj for the each logical channel j with the value of Bj>0 by the total size of uplink data that is already transmitted through uplink resources. When any uplink resource within the time window remains, the UE MAC layer further allocates the remaining uplink resource to all logical channels in the decreasing priority order regardless of the value of Bj until either the uplink data for higher-priority logical channels or the remaining uplink resource is exhausted.

Please note that, the value of Bj is increased periodically (every W TTIs) only under the time window is enabled. When the time window is disabled, the UE only considers the uplink resource at the current TTI, and increases the value of Bj by (PBR)ⱼ×TTI duration for each TTI. For example, the UE MAC layer can enable the time window and increase the value of Bj by (PBR)ⱼ×W TTIs once when the logical channel prioritization procedure begins, and then disable the time window.

In the prior art, the UE MAC layer considers the uplink resource only at the current TTI; the more logical channels share the uplink resource at the current TTI, the more overhead, i.e. MAC subheaders are included in a MAC PDU, which degrades performance of uplink transmission. In comparison, by considering uplink resources on all configured component carriers which arrive within the time window, more data of a higher-priority logical channel is allowable to be transmitted on an uplink resource. That is, the UE MAC layer reduces segments of uplink data received through a logical channel, i.e. RLC SDU, and thereby generates a MAC PDU with less overhead.

Please note that the abovementioned steps of the process 40 and steps after the process 40 can be realized by means that could be hardware, firmware known as a combination of a hardware device and computer instructions and data that reside as read-only software on the hardware device, or an electronic system. Examples of hardware can include analog, digital and mixed circuits known as microcircuit, microchip, or silicon chip. Examples of the electronic system can include system on chip (SOC), system in package (Sip), computer on module (COM), and the communication device 20.

In conclusion, according to the example of the present invention, the UE MAC layer allocates uplink resources on all configured component carriers arriving not only at the current TTI but within a time window, and the UE MAC layer increases the increment used for the bucket indicating variable according to the size of the time window. As a result, more uplink data of a higher-priority logical channel is transmitted on an uplink resource with less overhead, and therefore efficiency of uplink transmission is improved.

## Claims

1. A method for allocating uplink resources to logical channels for a user equipment in a wireless communication system, the method comprising:
receiving uplink data through each logical channel (404);
**characterized by** before receiving uplink data through each logical channel, enabling a time window when logical channels are established (402); and after uplink data through each logical channel are received, allocating uplink resources on all configured component carriers which arrive within the time window from a current transmission time interval, abbreviated to TTI, to all the logical channels with the value of a bucket indicating variable, which indicates the size of uplink data allowable to be transmitted, for each logical channel larger than zero in a decreasing priority order (408).

2. The method of claim 1 further comprising:
when the time window is enabled, increasing the value of the bucket indicating variable for each logical channel by a product of the prioritized bit rate for each logical channel and the size of the time window every duration that is equal to the size of the time window (406).

3. The method of claim 1 further comprising:
when the time window is disabled, increasing the value of the bucket indicating variable by a product of the prioritized bit rate for each logical channel and the TTI duration for each TTI.

4. The method of claim 1 further comprising:
after each logical channel with the value of the bucket indicating variable larger than zero is already served, decreasing the value of the bucket indicating variable for the each logical channel with the value of the bucket indicating variable larger than zero by the total size of uplink data that is already transmitted through the uplink resources; and
when any uplink resource within the time window remains, allocating the remaining uplink resource to all logical channels in the decreasing priority order regardless of the value of the bucket indicating variable until either the uplink data for higher-priority logical channels or the remaining uplink resource is exhausted.

5. The method of claim 1, **characterized in that** the number of all the configured component carriers is one at least.

6. The method of claim 1, **characterized in that** the size of the time window is assigned by a radio resource control signaling from a Radio Resource Control layer of the user equipment, or the size of the time window is a function of a semi-persistent scheduling period.

7. The method of claim 1 further comprising:
when semi-persistent scheduling resources arrive within the time window,
prioritizing semi-persistent scheduling data in the semi-persistent scheduling resources.

8. A communication device of a wireless communication system for allocating uplink resources to logical channels, the communication device comprising:
means for receiving uplink data through each logical channel (404);
**characterized by** means for before receiving uplink data through each logical channel, enabling a time window when logical channels are established (402);
and
means for after uplink data through each logical channel are received, allocating uplink resources on all configured component carriers which arrive within the time window from a current transmission time interval, abbreviated to TTI, to all the logical channels with the value of a bucket indicating variable, which indicates the size of uplink data allowable to be transmitted, for each logical channel larger than zero in a decreasing priority order (408).

9. The communication device of claim 8 further comprising:
means for increasing the value of the bucket indicating variable for each logical channel by a product of the prioritized bit rate for each logical channel and the size of the time window every duration that is equal to the size of the time window when the time window is enabled (406).

10. The communication device of claim 8 further comprising:
means for increasing the value of the bucket indicating variable by a product of the prioritized bit rate for each logical channel and the TTI duration for each TTI when the time window is disabled.

11. The communication device of claim 8 further comprising:
means for decreasing the value of the bucket indicating variable for the each logical channel with the value of the bucket indicating variable larger than zero by the total size of uplink data that is already transmitted through the uplink resources after each logical channel with the value of the bucket indicating variable larger than zero is already served; and
means for allocating any remaining uplink resource within the time window to all logical channels in the decreasing priority order regardless of the value of the bucket indicating variable until either the uplink data for higher-priority logical channels or the remaining uplink resource is exhausted.

12. The communication device of claim 8, **characterized in that** the number of all the configured component carriers is one at least.

13. The communication device of claim 8, **characterized in that** the size of the time window is assigned by a radio resource control signaling from a Radio Resource Control layer of the communication device, or the size of the time window is a function of a semi-persistent scheduling period.

14. The communication device of claim 8 further comprising:
means for prioritizing semi-persistent scheduling data in semi-persistent scheduling resources when the semi-persistent scheduling resources arrive within the time window.
